# EUROPEAN PATENT APPLICATION

(11) **EP 3 689 450 A1**
(43) Date of publication of application: **05.08.2020**
(21) Application number: 19154191.1
(22) Date of filing: 29.01.2019
(51) Int. Cl.: B01J 20/22, B01J 20/30, B01J 20/28

(54) **METHOD FOR PRODUCING A METAL ORGANIC FRAMEWORK FILM, METAL ORGANIC FRAMEWORK FILM AND USE OF A METAL ORGANIC FRAMEWORK FILM**

(71) Applicant: Ludwig-Maximilians-Universität München, 80539 München (DE)
(72) Inventor: Medina-Tautz, Dana, 80339 München (DE); Mähringer, Andre, 81377 München (DE); Rotter, Julian, 81369 München (DE)
(74) Representative: Tautz, Raphael Gerhard

(57) **Abstract**

The invention relates to a method for producing a metal organic framework, MOF, film (12) on a substrate (14). The method comprises providing a precursor solution (22) on a main surface (14a) of the substrate (14), the precursor solution (22) comprising organic building blocks (30) and metallic precursors (32), wherein the organic building blocks (30) and the metallic precursors (32) are selected to form organometallic compounds (34) allowing a formation of an anisotropic MOF. The method further comprises forming a MOF film (12) on the main surface (14a) of the substrate (14) by forming organometallic compounds (34) from at least some of the organic building blocks (30) and at least some of the metallic precursors (32) of the precursor solution (22), wherein a modulator (28) is provided for mediating at least partly the morphology of the MOF film (12) during the formation of the MOF film (12) such as to increase a roughness of the MOF film (12). The invention further relates to a MOF and the use of a MOF.

## Description

The invention relates to a method for producing a metal organic framework film, a metal organic framework film and a use of a metal organic framework film. In particular, the invention is located in the field of functional thin films and the application of such films.

Metal organic frameworks (MOFs) are known in the field as metal organic materials having a porous structure and as therefore offering a large surface area and in particular a large surface-to volume ratio.

As one class of MOFs, the material class M-CAT-1 is known, wherein M symbolizes a metal such as Ni, Co or Cu. The M-CAT-1 series represents an interesting material class, due to its highly crystalline and porous structure and its ability to conduct electrical charges. An overview over the M-CAT-1 material class and its properties is described in the publication Chem. Mater. 2012, 24 (18), 3511-3513 by Hamedh et al.. A MOF of the material class M-CAT-1 has been characterized with respect to its properties for oxygen reduction reactions, as described by Liu et al. in ACS Appl. Mater. Interfaces 2017 8 (34) 28473.

In another publication by Rubio-Gimenez et al., Adv. Mater. 2018 30, 1704291, a method for producing a film of the MOF Cu-CAT-1 via a Langmuir-Blodgett technique is described, wherein the films have a thickness of 10 nm and a smooth surface.

Furthermore, a different class of MOFs called UiO-66 has been shown to be suitable for growing porous, crystalline and oriented MOFs as thin films on gold surfaces. The obtained films had a smooth surface having a roughness of about 6 nm (RMS), which is often desired for the use of MOF films for organic electronics applications or respective studies, as described by Virmani et al. in J. Am. Chem. Soc. 2018 140 (14) 4812. Vapor-assisted conversion (VAC) has been used for growing the UiO-66 MOF on the gold substrate as a smooth and thin film having a roughness of about 6 nm (RMS). The technique of VAC was reported before by Medina et al. in J. Am. Chem. Soc. 2015 137 (3) 1016 for producing thin and smooth films of covalent-organic frameworks (COFs) at room temperature.

Hence, MOFs and COFs are known in prior art as material classes for the self-assembled generation of smooth and thin films, which exhibit a high degree of porosity and preferably crystallinity. For some specific MOF systems, modulators are known to be required for obtaining crystalline and porous bulk structures.

However, controlling the morphology of MOF films during the formation of the film is often not possible. In particular, the prior art lacks reliable methods for producing MOF films having functional surface structures, which are obtainable with low effort and low production costs. It is therefore the problem to be solved by the invention to provide a method for reliably and easily achieving MOF films having a functional nanostructured surface and/or a functional surface structuring.

The invention relates to a method for producing a metal organic framework, a metal organic framework and a use of a metal organic framework having the features specified in the respective independent claims. Preferred embodiments are subject matter of the dependent claims and the following description.

In a first aspect the invention relates to a method for producing a metal organic framework, MOF, film on a substrate. The method comprises a step of providing a precursor solution on a main surface of the substrate, the precursor solution comprising organic building blocks and metallic precursors, wherein the organic building blocks and the metallic precursors are selected to form organometallic compounds allowing a formation of an anisotropic MOF. In a further step, the method comprises forming a MOF film on the main surface of the substrate by forming organometallic compounds from at least some of the organic building blocks and at least some of the metallic precursors of the precursor solution, wherein a modulator is provided for mediating at least partly the morphology of the MOF film during the formation of the MOF film such as to increase a roughness of the MOF film.

In another aspect, the invention relates to a metal organic framework, MOF, film, wherein the MOF film is formed on a substrate by an anisotropic MOF of organometallic compounds. The organometallic compounds are formed by organic building blocks and metallic precursors and a surface of the MOF film has a roughness of at least 25 nm (RMS).

In another aspect the invention relates to a use of a metal organic framework, MOF, film for separating oil from water.

A MOF film preferably has a three-dimensional extension, wherein the thickness is much smaller than the MOF film's extension in one or two directions perpendicular to the thickness. Preferably the MOF film is a thin film having a thickness of not more than 100 µm, more preferably not more than 50 µm, much more preferably not more than 10 µm, particularly preferably not more than 5 µm, and most preferably not more than 1 µm. The MOF film's extension in one direction perpendicular to the thickness of the MOF film, preferably in both directions perpendicular to the thickness of the MOF film, is preferably at least 1 mm, more preferably at least 2 mm, much yet more preferably at least 5 mm, much more preferably at least 10 mm, most preferably at least 20 mm. The thickness of the MOF film is preferably its extension perpendicular to the main surface of the substrate.

Preferably a precursor solution is a fluid solution, in which the organic building blocks and the metallic precursors are dissolved. The precursor solution may comprise water and/or one or more further solvents, which may be polar or non-polar. Preferably the solvents contained in the precursor solution are misable and/or mixable with each other and/or formable to a homogenous mixture. For instance, the precursor solution may comprise a mixture of water and 1-propanol.

A metallic precursor preferably comprises at least one metal atom. The metallic precursor may comprise elemental metal or comprise the at least one metal atom or metal ion bound to other substances, such as for instance light elements. Preferably, the metallic precursors comprise at least one of the following elements: Ni, Co, Cu, Zn, Mn, Fe, and Mg. For instance, the metallic precursor may comprise an Oxygen bound to the metal and/or an oxide. According to other embodiments, the metallic precursor comprises or consist of a chemical compound, such as for instance a chemical compound of a metal and a halogen. According to some embodiments, the metallic precursor dissociates when binding to an organic building block and/or to a modulator and only a part of each of the metallic precursors is used when forming the organometallic compounds, such as a metal atom or metal ion, while other constituents of the metallic precursors do not form part of the organometallic compounds after its formation. In other words, according to some embodiments, the metallic precursors dissociate when forming an organometallic compound with one or more building blocks, wherein according to some embodiments only a part of each dissociated metallic precursor forms an organometallic compound with one or more organic building blocks. The metallic precursors may be identical or different from each other. In the following description, the mentioning of a metallic precursor shall also include one or more parts of the metallic precursors. For example, the mentioning of a metallic precursor binding to another entity and/or forming an organometallic complex with an organic building block shall comprise also merely a part of the metallic precursor binding to another entity and/or forming an organometallic complex with one or more organic building blocks.

The organic building blocks preferably are organic molecules, which are suitable for binding to at least one of the metallic precursors, or a part of it, in order to form an organometallic compound. The organic building blocks may be identical and/or different from each other.

The organometallic compounds are formed by the organic building blocks and the metallic precursors and preferably do not comprise any other constituents beside the organic building blocks and the metallic precursors. An organometallic building block may comprise one metallic precursor, or a part of it such as a metal atom of the metallic precursor, and two or more building blocks arranged around the metallic precursor or its part, respectively. The organometallic building block may also comprise multiple metallic precursors and multiple organic building blocks formed around and between the metallic precursors. For example, the organometallic building blocks may form a larger contiguous structure comprising several metallic precursors and organic building blocks. The one or more organic building blocks may be arranged in one plane forming a flat layer. According to other embodiments, the one or more organic building blocks may be arranged in a three-dimensional structure, i.e. not forming a layer in one plane but being arranged in different directions and dimensions. Each organometallic compound comprises at least one organic building block and at least one metallic precursor attached to each other.

A MOF is regarded as being anisotropic when it preferably has a non-cubic morphology and/or allows growing in a non-cubic morphology. In other words, an anisotropic MOF preferably allows growing to different sizes in different dimensions. In other words, the width, length and thickness of an anisotropic MOF do not need to be identical to each other but may differ from each other. In particular, the organic building blocks and the metallic precursors are preferably chosen such as to form organometallic compounds allowing a growth of an anisotropic MOF. In other words, the anisotropy of a MOF is preferably determined by the choice of the organic building blocks and/or the metallic precursors.

The main surface of a substrate may be any surface of the substrate, which can be exposed to the precursor solution. The substrate and/or its main surface may have a planar or a non-planar shape. According to some embodiments, the substrate and/or its main surface may have planar and non-planar parts. For instance, the substrate may be a planar waver and may have a planar surface, on which the precursor solution may be provided. According to other embodiments, the substrate may have a non-planar shape. For example, a non-planar substrate and/or its non-planar main surface may have at least partly a curved shape and/or a cylindrical shape and/or convex shape and/or a concave shape and/or a spherical shape and/or an elliptical shape and/or a mesh-like shape or any other desirable shape. Preferably, the main surface of the substrate and/or the substrate may comprise or consist of one or more of the following materials: gold, semiconductor materials, metals and/or other conductive materials, such as for instance indium-tin-oxide, and/or inorganic insulators, such as for instance glass. The main surface and/or the whole substrate preferably may be pre-treated and/or coated before producing the MOF film on the main surface, such as for instance by washing and/or cleaning and/or plasma-cleaning. The substrate may preferably comprise or be made of a glass, a semiconductor, such as silicon, and/or a metal, such as gold and/or stainless steel. Preferably, the substrate may be coated in particular on its main surface. For instance, the substrate may be coated with an electrically conductive material, such as a metal and/or a conductive oxide. Preferably, the substrate is coated at least partly at its main surface with gold and/or indium-tin-oxide (ITO). Preferably, the roughness of the main surface of the substrate is smaller than 10 nm, more preferably smaller than 5 nm, much more preferably smaller than 1 nm (RMS), most preferably the substrate is atomically smooth. Preferably, the change of morphology of the MOF film by the modulator is not affected by the roughness of the main surface of the substrate.

The modulator being provided for mediating at least partly the morphology of the MOF means that by providing the modulator, the formation of the MOF film, i.e. the growth of the MOF, is altered such as to result in a different morphology of the MOF film than when forming or growing the MOF film without the modulator. The mediating may comprise an interaction of the modulators with the metallic precursors and/or organometallic compounds and/or the growing MOF. For instance, the formation of organometallic compounds by organic building blocks and metallic precursors may be altered by providing the modulator. Alternatively or additionally, the formation of a MOF film by multiple organometallic compounds may be altered by providing the modulator as compared to its formation in absence of a modulator. The morphology of the MOF film preferably represents a macroscopic shape or form of appearance, while the microscopic and/or atomic and/or nanoscopic arrangement of the organometallic compounds may be largely unaffected. For instance, the morphology change provoked by providing the modulator may result in the MOF film having a larger roughness than a smooth MOF film forming in absence of the modulator. The mediation of the morphology by the modulator increasing a roughness of the MOF film means that by providing the modulator, an unevenness of at least one surface of the MOF film is increased. The roughness may be an absolute roughness, which may be measured for instance in nanometers, and/or a relative roughness, which represents a ratio of the roughness of the at least one surface of the MOF film to the MOF film's thickness. The roughness of the MOF film may be a roughness at an upper surface of the MOF film, which may be essentially parallel to the main surface of the substrate and at a surface directed away from the substrate. The term "modulator", even when used in singular, may relate to multiple modulators. Multiple modulators may represent multiple identical modulators, such as for instance multiple identical molecules, and/or may represent different kinds of modulators.

Preferably, the method may comprise a further step of heating when the precursor solution is provided on the main surface of the substrate. Preferably, the method is carried out at least partly at elevated temperatures, more preferably in an oven and/or in an autoclave.

The invention provides the advantage that it facilitates altering the morphology of MOF films with low effort and hence allows the generation of nanostructured films with a variety of morphological shapes and/or structures. By this, a post-treatment of the MOF film by chemically and/or physically altering the MOF after its self-assembly may be obsolete. Therefore, the manufacturing steps for providing a MOF film with a desired surface can be reduced and, hence, the production costs for the MOF films can be reduced.

The invention provides the advantage that it allows increasing the roughness of MOF films during the growth of the MOF films. Therefore, the self-assembly of the MOF during the growth of the MOF film can be used for achieving a MOF film with increased roughness. Consequently, the invention provides a method for producing rough films and, hence, rough surfaces without an effortful and expensive post-treatment of the films and surfaces.

Furthermore, the invention provides the advantage that it facilitates the generation of super-hydrophilic and/or super-oleophobic surfaces. Due to the ability of increasing and preferably controlling the roughness of the produced MOF films, MOF films having desired super-hydrophilic and/or super-oleophobic properties may be provided. This provides a facilitated and cheap way of providing films and/or coatings for surfaces to alter the surfaces' properties. In particular it provides a method for achieving desired super-oleophobic and/or super-hydrophilic MOF films for coating surfaces by choosing suitable organic building blocks and/or metallic precursors and/or a modulator such as to obtain a MOF film on the main surface of the substrate in a self-assembled manner. For example, the MOF film may be used as and/or provided as a functional coating, in particular as an anti-fog coating for preventing condensation of fluids, in particular of water, on the surface coated with the MOF film. This may render an effortful post treatment obsolete, such as a femtosecond Laser ablation of a surface, which is conventionally conducted for obtaining rough surface textures providing super-hydrophilic and/or super-oleophobic properties, as for instance described by Chen et al. in Adv. Mater. Interfaces 2018, 5, 1701370. In particular, an effortful post treatment by means of ablation with ultra-short Laser pulses may become obsolete, since the roughness of the surface, which is required for enhancing the hydrophilic and/or oleophobic properties, can be achieved already during the self-assembly forming the MOF film. According to other embodiments, hydrophobic and/or oleophilic properties of a MOF film may be enhanced by mediating at least partly the morphology of the MOF film during the formation of the MOF film such as to increase the roughness of the MOF film. Preferably, a MOF film having moderately hydrophilic and/or oleophobic properties when having a smooth surface may be mediated by the modulator such as to have a rough surface exhibiting super-hydrophilic and/or super-oleophobic properties. Preferably, in a similar manner a MOF film having moderately hydrophobic and/or oleophilic properties when having a smooth surface may be mediated by the modulator such as to have a rough surface exhibiting super-hydrophobic and/or super-oleophilic properties. The attribute "super" with regard to hydrophobic, hydrophilic, oleophobic and oleophilic, respectively, indicates a particularly large magnitude of the respective property. Preferably, a MOF film having super-hydrophilic properties may for instance exhibit hydrophilic properties being at least 2 times, preferably at least 3 times, more preferably at least 5 times, much more preferably at least 10 times larger than the hydrophilic properties of a regularly or moderately hydrophilic MOF film. The same applies, mutatis mutandis, to the different magnitudes of hydrophobic, oleophilic and/or oleophobic properties, respectively. Preferably, a surface is regarded as "super-hydrophilic" when the water contact angle between a water droplet and the surface is 10° or less. Preferably, a surface is regarded as "super-oleophobic" when the oil contact angle between an oil droplet and the surface underwater is 150° or more.

In addition, the invention allows providing respective coatings and filters for separating oil and water or other polar from non-polar fluids, by providing MOF films having a suitable roughness to the desired substrate. The shape and/or structure of the substrate and/or the roughness of the MOF film produced thereon may be chosen and/or determined such as to optimize the separation performance of the filter for the desired fluids to be separated. Moreover, the invention provides the additional advantage that using a MOF film having a specifically prepared and/or optimized roughness for filter fluids, such as oil from water, may further exploit the porous structure of the MOF film itself. In other words, the pores of the MOF film preferably may be used for a filtration of the water and/or oil before and/or during and/or after the separation of the water and the oil. Since the pore sizes of the MOF film preferably are adjustable and may be on a nanometer scale, the pores of the MOF film can be exploited for further filtering contaminations and/or undesired constituents out of the separated water and/or separated oil, such as for instance pathogens and/or antibodies and/or nanometer sized particles and/or chemicals and/or drugs.

Preferably, the invention provides the advantage that the produced MOF film having a rough surface produced by using a modulator comprises or consists of pillar-like structures. Also a MOF film having a smooth surface, which was produced without a modulator, may comprise pillar-like structures. However, the use of a modulator according to the invention preferably has the effect that a peak-to-peak distance, in particular an average peak-to-peak distance, between two neighboring pillar-like structures is significantly increased, i.e. that the average peak-to-peak distance increases at least by a factor of 2, more preferably at least by a factor of 3, even more preferably at least by a factor of 5, much more preferably at least by a factor of 7, most preferably at least by a factor of 10 when using the modulator. For instance, an average peak-to-peak distance between two neighboring pillar-like structures may increase due to the use of a modulator from about 10 to 15 nm to about 100 to 150 nm.

According to a preferred embodiment, the organic building blocks have a symmetrical structure in one dimension. The structure is preferably rotationally symmetric and more preferably has at least a 2-fold (C2), or a 3-fold (C3), or a 4-fold (C4) or a 6-fold (C6), or 8-fold (C8) symmetry. For example, two organic building blocks having a two-fold symmetry may be arrangeable in a symmetric manner around one metallic precursor or a part thereof. Similarly, three organic building blocks having a three-fold symmetry may be arrangeable in a symmetric manner around one metallic precursor or a part thereof, etc..

According to some embodiments, the organic building blocks may be planar organic building blocks. In other words, the organic building blocks preferably may have a planar structure. For instance, the atoms comprised by each organic building block may be arranged in one plane. This provides the advantage that the organic building blocks may be well suited for forming an anisotropic growth of the MOF film. According to other embodiments, the organic building blocks may have a non-planar shape. For instance, the atoms comprised by each organic building block may not be arranged in one plane but may be have a three-dimensional arrangement exceeding one plane.

Moreover, according to some embodiments the organic building blocks may be selected to arrange in one and the same plane when forming a planar organometallic compound. In other words, the organometallic compounds may comprise at least one metallic precursor or a part thereof, and at least two organometallic compounds being arranged in one plane. Such a configuration may be advantageous for forming an anisotropic MOF film. In particular, such a configuration may be beneficial for forming a layered MOF film comprising one or more layers of organometallic compounds. However, according to other embodiments the organic building blocks may assemble out of plane around one or more metallic precursors or parts thereof, i.e. not all organic building blocks of an organometallic compound are necessarily arranged in one plane.

Preferably, each of the organic building blocks has two or more connection sites for connecting to at least one of the metallic precursors or to a part of one of the metallic precursors. More preferably, the organic building blocks may connect to one metallic precursor or a part thereof by means of one connection site each. An organic building block preferably may be bound to a metallic precursor or a part thereof via one of the connection sites. A connection site may be an atom and/or an ion of the organic building block for binding to the metallic precursor or a part thereof. An organic building block having two connection sites may be capable of binding to two metallic precursors or parts thereof. Preferably, an organic building block may bind to as many metallic precursors or parts thereof as the number of its connection sites. According to other embodiments, the organic building blocks may have more than two connection sites. Organic building blocks having multiple connection sites allow the formation of organometallic compounds forming a network of multiple metallic precursors or parts thereof and multiple organic building blocks. This may preferably facilitate the self-assembly of the MOF film and/or the formation of an anisotropic MOF and/or the formation of layered organometallic compound structures.

According to some embodiments the modulator is selected to mediate the morphology of the MOF film such as to form pillar-like and/or rod-like and/or needle-like structures. In other words, the modulator preferably is selected to mediate the morphology of the MOF film such as to form elongated structures. This provides the advantage that the formation of a rough surface of the MOF film is facilitated. Moreover, the increase of the roughness of the MOF film may be promoted and/or facilitated by providing a modulator mediating the MOF film morphology such as to form elongated structures having a large aspect ratio, i.e. a large ratio of the length over the diameter or thickness.

According to some embodiments the modulator comprises a ligating group. The modulator comprising a ligating group means that the modulator may bind to one or more of the metallic precursors or a part thereof and/or to one or more of the organic building blocks, wherein the bonding preferably forms less chemically stable substances with respective to the bonding between the organic building blocks and the metallic precursors in the MOF and the resulting MOF film. In other words, the bonding between the metallic precursors and the building blocks preferably is energetically more favorable than the bonding between the modulator and the metallic precursor or organic building block. This provides the advantage that the modulator can preliminarily and/or temporarily bind to one or more of the metallic precursors and/or to one or more of the organic building blocks and by this mediate and/or alter the formation of the organometallic compounds and, hence, of the MOF film. Preferably, the modulator is selected to temporarily and/or reversibly form an intermediate state with the organic building blocks and/or with the metallic precursors.

Preferably, the modulator comprises at least one of the following elements: Oxygen (O), Sulfur (S), Nitrogen (N) and/or Carbon (C). The modulator may comprise compounds comprising at least one of these elements. According to some embodiments, the modulator preferably comprises an amine and/or an acid and/or an alcohol and/or a thiol. Preferably, the modulator comprises at least one carboxylic acid, most preferably acetic acid and/or salicylic acid. The modulator may comprise a mixture of different acids and/or amines and/or alcohols and/or thiols. For different organic building blocks and/or different metallic precursors and/or different desired morphologies different modulators may be suitable and/or advantageous. Thus, the modulator may be selected in dependence of the constituents of the MOF to be formed and/or in dependence of the desired morphology the MOF film to be formed shall have.

Preferably, providing the precursor solution on the main surface comprises casting the precursor solution onto the main surface and/or printing the precursor solution onto the main surface and/or dipping the main surface at least partly into the precursor solution. Preferably, the precursor solution may be provided on the main surface by bringing the precursor solution into contact with the main surface of the substrate. Most preferably, the precursor solution is provided on the main surface in liquid form for instance by wetting the main surface with the precursor solution. This provides the advantage that at least some of the building blocks and at least some of the metallic precursors provided in the precursor solution can be assembled to form the MOF film on the main surface of the substrate.

Preferably, the precursor solution at least partly comprises the modulator. Alternatively or additionally, the modulator is at least partially provided in vapor phase. According to some embodiments, the modulator is entirely provided in the precursor solution. According to other embodiments, the modulator is solely provided in a vapor phase. Providing the modulator in the precursor solution may facilitate the step and/or process of forming the MOF film, since providing the modulator in a vapor phase may be obsolete. However, providing the modulator in a vapor phase may provide additional degrees of freedom for mediating the formation of the MOF film and/or altering the morphology of the MOF film. For instance, for some modulators it might be advantageous to provide them in the precursor solution. For other modulators, providing them in a vapor phase may be advantageous. According to some embodiments, at least a first modulator may be provided in the precursor solution, while a second modulator being different from the first modulator may be provided in a vapor phase. These different ways of providing the modulator allows a high degree of freedom for mediating the formation of the MOF film.

Providing the modulator in a vapor phase may comprise providing the modulator at least partly dissolved in a solvent, such as in a solvent bath, wherein the solvent bath is not in direct contact with the main surface of the substrate. In other words, the main surface of the substrate is not in contact with the liquid phase of the solvent bath but may be in contact with the vapor phase of the solvent bath. Modulators vaporizing in vapor phase from the solvent bath may thus come into contact with the main surface of the substrate and/or the precursor solution provided on the main surface of the substrate while being in vapor phase.

Preferably, the method for producing the MOF film uses vapor-assisted conversion and/or dry-gel conversion and/or liquid-phase epitaxy and/or steam-assisted conversion. For different kinds of MOFs, i.e. for different kinds of organic building blocks and/or different metallic precursors, different techniques may be advantageous. A benefit of the invention may be that it is applicable to a large variety of techniques, such as the techniques mentioned above.

Preferably, the MOF film is formed on the main surface of the substrate such that an upper surface of the MOF film has a roughness of at least 25 nm (RMS), preferably of at least 30 nm, more preferably of at least 35 nm, most preferably of at least 40 nm. The upper surface of the MOF film is preferably a surface, which is substantially parallel to the main surface of the substrate but is facing away from the main surface of the substrate. The roughness of the MOF film preferably is not more 500 nm, more preferably not more than 400 nm, yet more preferably not more than 300 nm, much more preferably not more than 200 nm, most preferably not more than 150 nm. The roughness values correspond to a RMS value being representative for a significant part of the MOF film's upper surface.

The thickness of the MOF film is preferably not more than 2 µm, more preferably not more than 1 µm, yet more preferably not more than 500 nm, much more preferably not more than 300 nm, most preferably not more than 150 nm. If not indicated otherwise, all values regarding the roughness of the MOF film in this application are provided as RMS values.

More preferably the relative roughness of the MOF film, i.e. the ratio of the RMS roughness over an average thickness of the MOF film or a representative part thereof, for which the roughness has been determined, is at least 15%, yet more preferably at least 30%, much more preferably at least 50%, most preferably at least 75%.

Preferably the MOFs and/or MOF films are adopted to absorb at least partly electromagnetic radiation. More preferably, the MOFs and/or MOF films are adapted to absorb at least partly optical radiation in the visible and/or ultra-violet and/or near-infrared spectral range. This may be advantageous for producing coatings by using a MOF film, since the coating may be provided with respective optical absorption properties. Hence, a coating may be provided that has besides desired hydro- and/or oleophobic and/or -philic properties also desired optical properties. For instance, different MOF materials may be provided resulting in MOF films having different optical properties.

Moreover, the MOFs and/or MOF films may be electrically conductive or electrically insulating. For instance, different MOF materials may be provided resulting in MOF films having different electrical properties and in particular different electrical conductivities. For example, MOF films of the M-CAT class may be produced having electrical conductivities up to 10⁻² S/cm. This may be advantageous for producing electrically conductive coatings by using a MOF film, since the coating may be provided with respective electrical properties. This may be particularly advantageous for providing coatings, which are electrically conductive and exhibit desired hydro- and/or oleophobic and/or-philic properties. Moreover, such coatings may be adapted to be at least partly, preferably fully, optically transparent in the visible and/or near infra-red spectral range. Therefore, such coatings may be advantageously provided on display screens and/or photovoltaic panels for reducing and/or preventing an adhesion of dirt.

It is understood by a person skilled in the art that the above-described features and the features in the following description and figures are not only disclosed in the explicitly disclosed embodiments and combinations, but that also other technically feasible combinations as well as the isolated features are comprised by the disclosure of the invention. In the following, several preferred embodiments of the invention and specific examples of the invention are described with reference to the figures for illustrating the invention without limiting the invention to the described embodiments.

### Brief description of the Figures

Figure 1 shows in a schematic view a system for producing a metal organic framework (MOF) film.
Figure 2 shows a more detailed, simplified view of the formation of a MOF film 12 in system 10.
Figures 3A and 3B depict chemical structures of an exemplary organic building block, an exemplary metallic precursor, an exemplary modulator and an exemplary organometallic compound.
Figures 4A to 4C show chemical structures of organometallic compounds according to preferred embodiments.
Figures 5A and 5B show cross-sectional images taken with a scanning electron microscope (SEM) of different Ni-CAT-1 MOF films.
Figures 6A and 6B show cross-sectional images taken with a SEM of different Co-CAT-1 MOF films.
Figures 7A to 7G represent photographs showing in a side view water droplets and oil droplets on different MOF films.
Figure 8 shows a microscopic picture of a stainless steel mesh forming the basis of an oil filter element for separating oil from water.

### Detailed description

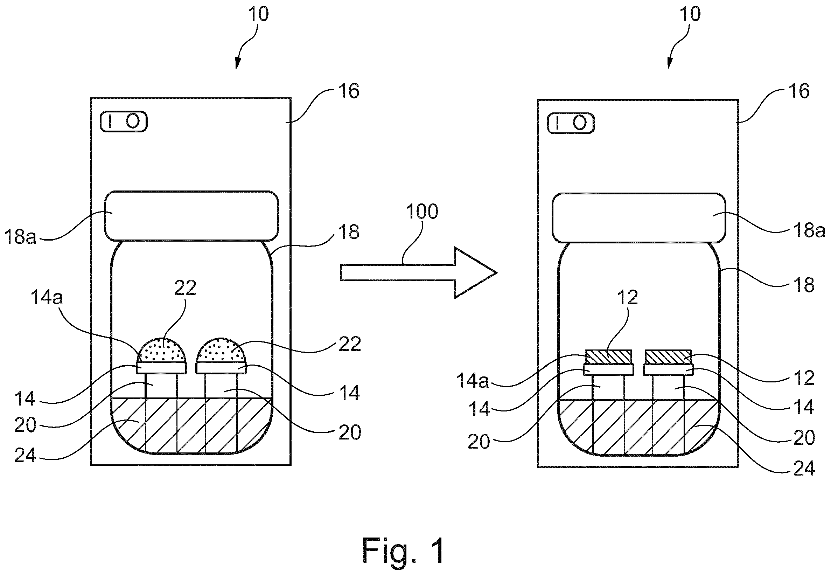

Figure 1 shows in a schematic view a system 10 for producing a metal organic framework (MOF) film 12 on a main surface 14a of a substrate 14 and in particular for producing multiple MOF films 12 on multiple substrates 14.

According to the presented preferred embodiment the system 10 comprises an oven 16, in which an autoclave 18 is placed, wherein the autoclave is sealed by a lid 18a. The oven 16 allows to heat the autoclave 18 and the contents in the interior of the autoclave 18 to elevated temperatures being suitable for producing the MOF. According to this embodiment, the MOF film 12 is produced by vapor-assisted conversion in the system 10. The technique vapor-assisted conversion is described in detail for example in the respective above-cited reference.

The left side of Figure 1 shows the system 10 at the start of the process for producing the MOF film 12. Within the autoclave 18, two substrates 14 are arranged on a substrate holder 20 each. Although two substrates 14 and two substrate holders 20 are depicted in this schematic view, also only one or more than two substrates and/or substrate holders may be provided within the autoclave 18. The substrates 18 are placed on their respective substrate holder 20 such that the main surface 14a is directed upwards.

On the main surface of each of the substrates 14 a precursor solution 22 is provided. According to the shown embodiment, the precursor solution is provided by dropcasting the precursor solution 22, for instance as a droplet, onto the main surface 14a of the substrate 14. For the presented embodiment it is beneficial by having the substrates arranged such that their main surface is directed upwards, which may facilitate providing the precursor solution 22 thereon.

The precursor solution 22 comprises at least organic building blocks and metallic precursors, each selected to form organometallic compounds allowing a formation of an anisotropic MOF. According to the presented embodiment the organic building blocks and the metallic precursors may be dissolved in the precursor solution. Accordingly, the precursor solution 22 may comprise one or more solvents for dissolving the organic building blocks and/or metallic precursors such as to freely move in the provided precursor solution 22 on the main surface 14a.

Underneath the substrate 14 and the precursor solution 22 a solvent bath 24 is provided within the autoclave 18. The solvent bath comprises a solvent, which at least partly vaporizes when heating the autoclave 18 during the production of the MOF films 12. The level of the solvent bath 24 ends underneath the main surface 14a of the substrate 14 and preferably underneath the substrate 14 itself to ensure that the main surface 14a is not in contact with the liquid phase of the solvent bath 24. The vapor of the solvent bath 24 assists in the formation of the MOF film 12 during the production of the MOF film 12, as will be detailed further below. According to some embodiments, the modulator is provided only in the solvent bath 24, wherein the modulator at least partly vaporizes when heating the autoclave 18 such that at least a part of the modulator is provided in vapor phase to the main surface 14a and/or the precursor solution 22. According to other embodiments, the modulator is provided only within the precursor solution 22, i.e. together with the organic building blocks and the metallic precursors, wherein the modulator is preferably dissolved in a solvent of the precursor solution 22. According to yet other embodiments, the modulator is provided partly within the solvent bath, such that the modulator can be provided in vapor phase, and partly also within the precursor solution 22. By providing the modulator within the precursor solution 22 and/or within the solvent bath 24 the exposure of the metallic precursors and/or the organic building blocks to the modulators may be determined and/or adjusted.

After preparing the system 10, as shown on the left side of Figure 1, the MOF films can be produced on the main surfaces 14a of the substrates 14, as indicated by arrow 100. For producing the MOF film, vapor-assisted conversion may be used, as for example described in the respective above-cited reference. For producing the MOF films, the system 10 is kept at an elevated temperature, wherein elevated means well above room temperature for a predetermined time period, for instance at 85° C for three hours. According to some embodiments, the substrates 14, precursor solutions 22, solvent bath 24 etc. may be arranged within the autoclave 18 before placing the autoclave in the oven 16, wherein the oven 16 may be preheated, for instance to 85° C, for quickly heating the autoclave 18 and its content to the desired elevated temperature when the autoclave 18 is placed in the oven. According to other embodiments, different time periods and/or different elevated temperatures may be chosen. The selection of the respective predetermined time period and/or the respective elevated temperature may depend on the MOF film to be produced, in particular of the organic building blocks, the metallic precursors, the modulators and/or the desired thickness of the MOF film.

During the formation of the MOF films 12, organometallic compounds are formed by a self-assembly of the organic building blocks and the metallic precursors. The modulators, which are provided in the vapor phase by vaporizing from the solvent bath 24 and/or which are provided within the precursor solution 22, at least partly mediate the morphology of the MOF such as to produce a MOF film having a rough surface. Depending on the type and/or concentration and/or the way of providing them may alter the mediation of the MOF films morphology and its roughness.

When the predetermined time period at the elevated temperature is completed, MOF films 12 have been formed on the main surfaces 14a of the substrates 14. The MOF film has been formed by organometallic compounds of the organic building blocks and the metallic precursors, which were provided in the precursor solution 22. The autoclave 18 may be taken out of the oven 16 and let cool down to room temperature. Then, the autoclave can be opened and the substrates 14 with the MOF films 12 formed on their main surface 14a may be taken out.

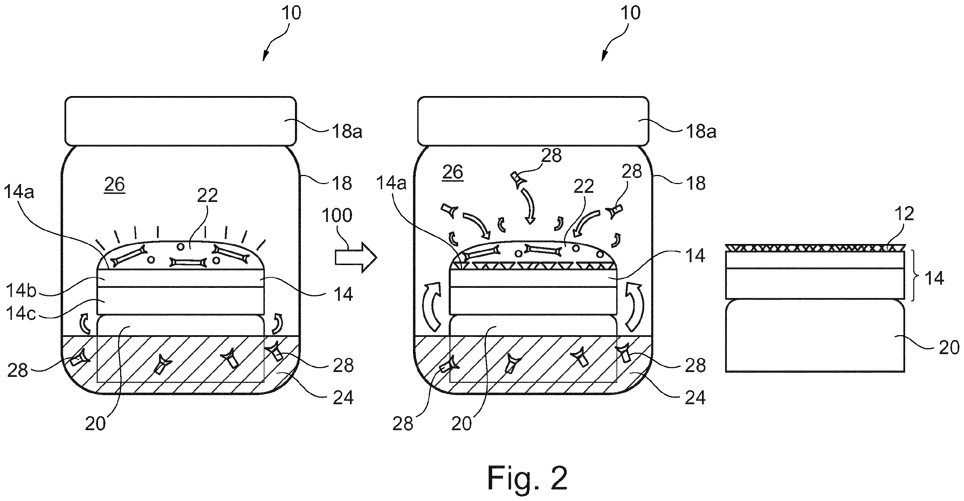

Figure 2 shows in a schematic view a more detailed, simplified view of the formation of a MOF film 12 in system 10. For the sake of better visibility, the oven is not shown and only one sample 14 and MOF film 12 is shown in the autoclave 18. As a skilled person understands, providing an oven is not necessary, since according to other embodiments the autoclave 18 itself may be heatable and/or heated by other means.

As can be seen in Figure 2, modulators 28 are provided in the solvent bath 24, wherein the modulators 28 are dissolved in the solvent comprised by the solvent bath 24. The precursor solution 22 contains organic building blocks and metallic precursors. The sample 14 may be formed by several layers, such as for instance a semiconductor or glass substrate 14c coated with a gold layer 14c forming the main surface 14a of the substrate.

At least a part of the solvent bath 24 vaporizes and generates a solvent atmosphere 26 within the autoclave 18, wherein at least a part of the modulators 28 also evaporates and is present in a vapor phase in the solvent atmosphere 26.

When producing the MOF film 12 in system 10, as indicated by arrow 100, i.e. when heating the system 10, the vaporization of the solvent bath 24 and the vaporization of the modulators 28 increase, resulting in a higher concentration of modulators 28 in the vapor phase in the vapor atmosphere 26. At least a part of the modulators 28 in the vapor phase enters the precursor solution 22 and mediates the morphology of the MOF film 12 formed on the main surface 14a of the substrate 14. Due to the elevated temperature, also a part of the precursor solution, in particular a solvent comprised by the precursor solution 22, is vaporized leading to the precursor solution 22 to dry out and leaving behind a MOF film 12 formed on the main surface 14a of the substrate 14 (as shown in detail on the right side).

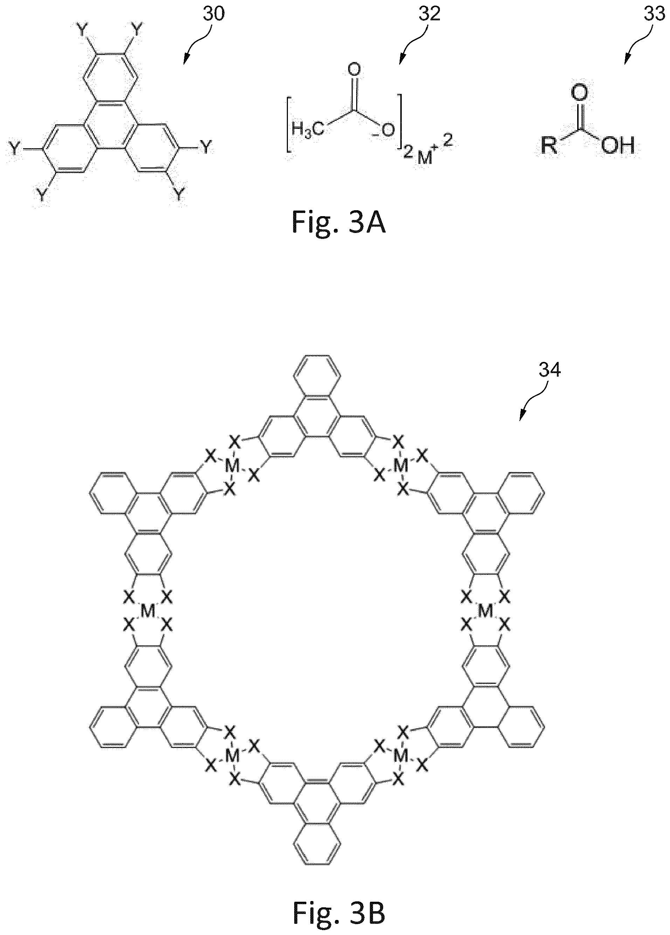

Figures 3A to 3D depict chemical structures of an exemplary organic building block 30, an exemplary metallic precursor 32 and an exemplary modulator 33 for forming an organometallic compound 34 to form an M-CAT-1 MOF. The exemplary organic building blocks 30 and exemplary metallic precursors 32 may be provided in the precursor solution 22. When producing a MOF film 12, multiple organic building blocks 30 and metallic precursors 32 form together one or more organometallic compounds 34. The depicted organometallic compounds 34 of the M-CAT-1 MOF is formed by hexagonal structures consisting of six metallic precursors 32 and six organic building blocks 30. According to some embodiments, the organometallic compounds may grow larger within the plane of the hexagonal structure and comprise multiple hexagonal structures attached to each other like a honeycomb structure. The MOF may also grow in a direction perpendicular to the plane of the hexagonal structure and thus form a three-dimensional arrangement of organometallic compounds.

The "M" represents a metal atom or ion, wherein several different metals may be chosen for forming the M-CAT-1 MOF. For example, the metal may be chosen to be Nickel, Cobalt or Cupper to form a Ni-CAT-1, Co-CAT-1 and Cu-CAT-1, respectively. At the positions of the placeholders "M", a respective metal ion of Ni, Co or Cu is present at the respective MOFs. However, according to other embodiments, different kinds of MOFs are used which do not fall under the category of M-CAT-1 MOFs.

Figures 3A and 3B depict chemical structures of an exemplary organic building block 30, an exemplary metallic precursor 32, an exemplary modulator 33 and an exemplary organometallic compound 34 according to a preferred embodiment.

Figure 3A shows on its left side a chemical structure of an organic building block 30 according to a preferred embodiment. The "Y" preferably represents for instance on of the following extensions: OH, NH₂, SH. In the middle of Figure 3A, an exemplary chemical structure of a preferred metallic precursor is depicted, wherein the "M" represents a metal atom or ion, respectively. Most preferably, the "M" represents a metal of the following list: Ni, Cu, Co, Fe. The right side of Figure 3A depicts the chemical structure of a modulator 33 according to preferred embodiments. The "R" preferably represents CH₃ in the case of the modulator being an acetic acid. According to other embodiments, the "R" may preferably represent a phenol in the case of the modulator being a salicylic acid. However, according to other embodiments, different extensions than phenol and CH₃ may be used.

Figure 3B shows the chemical structure of an organometallic compound 34 according to a preferred embodiment, which is preferably formed by the constituents shown in Figure 3A. The depicted organometallic compound 34 has a hexagonal, honeycomb-like structure. Although only one hexagonal structure is shown, the organometallic compound 34 may further extend within the plane of the hexagonal structure and may preferably comprise further hexagonal structures or parts of them attached thereto. Alternatively or additionally, the organometallic compound 34 may preferably extend in a direction perpendicular to the plane of the hexagonal structure. The "X" in the chemical structure may represent for instance one or more of O, N and S, depending on the specific organic building blocks provided in the precursor solution, as depicted in Figure 3A. The "M" in the chemical structure may represent one or more of Ni, Cu, Co and Fe, depending on the metallic precursors 32 provided in the precursor solution, as depicted in Figure 1.

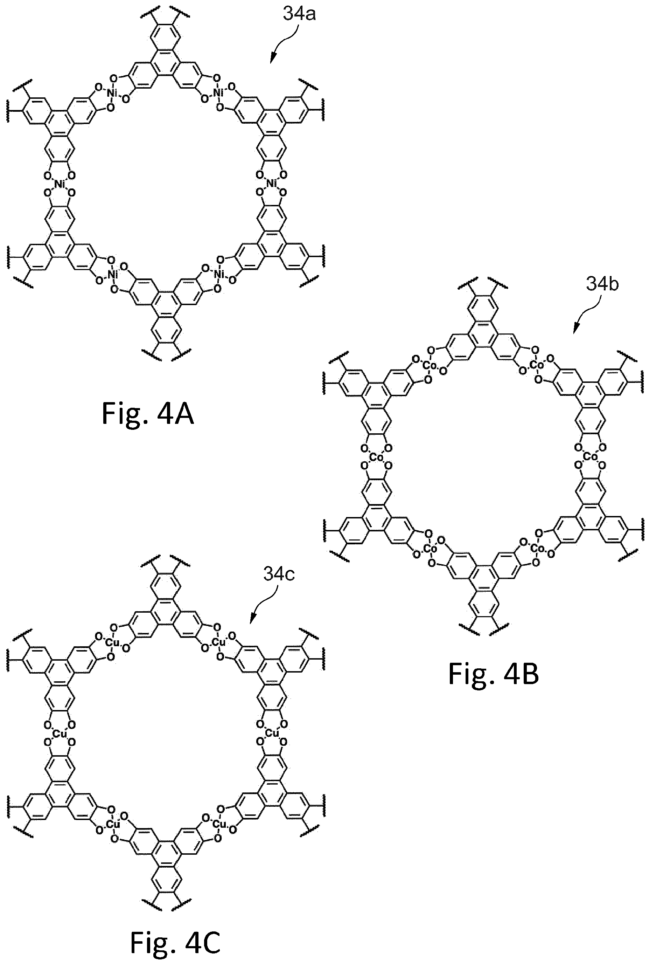

Figures 4A to 4C show the corresponding structures of an organometallic compound of a Ni-CAT-1 34a, a Co-CAT-1 34b, and a Cu-CAT-1 34c, respectively. The structure corresponds to the structure shown in Figure 3B, wherein the metal represented by "M" in Figure 3B is Ni (Figure 4A), Co (Figure 4B) and Cu (Figure 4C), respectively and the "X" in Figure 3B is implemented as oxygen atoms O in the chemical structures show in Figures 4A to 4C.

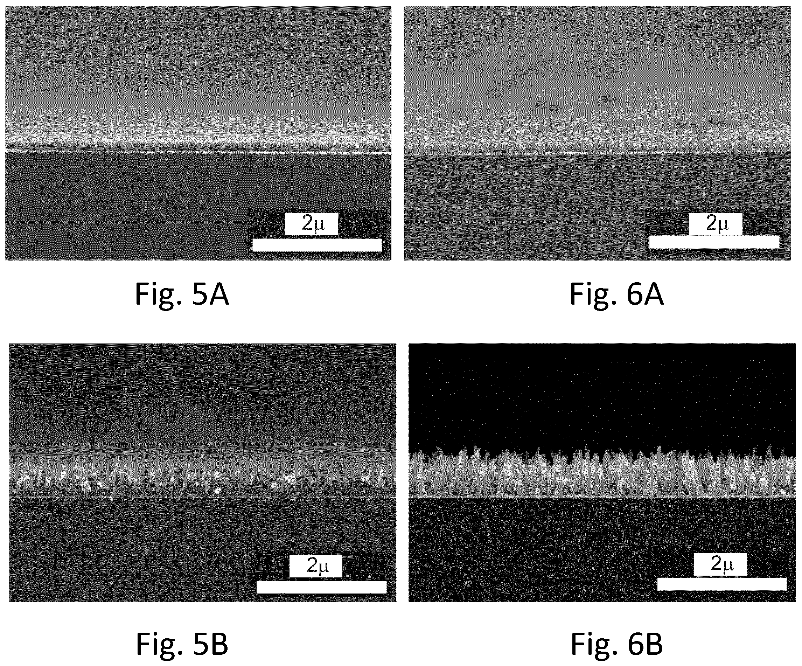

Figures 5A and 5B show cross-sectional images taken with a scanning electron microscope (SEM) of different Ni-CAT-1 MOF films. Figure 5A shows a MOF film, which was produced without providing a modulator. Figure 5B shows a MOF film, which was produced providing a modulator but otherwise with an identical production method. Therefore, Figures 5A and 5B allow a comparison of the formed MOF films with and without providing a modulator. Providing the modulator 28 for the formation of the MOF film significantly increases the roughness of the MOF film. While the MOF film shown in Figure 5A has a smooth surface, the MOF film shown in Figure 5B mainly comprises needle-like structures standing essentially perpendicular on the main surface of the substrate, which results in a MOF having a large roughness. For characterizing the roughness of the MOF films, measurements have been carried out using an atomic force microscope (AFM). The measurements determined an average roughness (RMS) of a measured area of 5 µm x 5 µm of the MOF films of 6 nm when produced without modulator (Figure 5A) and a roughness of 44 nm when produced with modulator (Figure 5B). Figure 6A and 6B show the equivalent SEM images taken from a Co-CAT-1 MOF formed without modulator (Figure 6A) and with modulator (Figure 6B), which were characterized to have a RMS roughness of 20 nm when produced without modulator and 56 nm when produced with modulator.

The Ni-CAT-1 MOF film shown in Figure 5B was produced as described in the following:
The precursor solution was prepared by providing a 2,3,6,7,10,11-hexahydroxytriphenylene (HHTP) precursor (5.4 x 10⁻³ mmol; 1.75 mg) as organic building blocks and nickel acetate (10 x 10⁻³ mmol; 2.5 mg) as metallic precursors in a defined ratio (1:2 n:n) and dissolving them in a solvent mixture of water and 1-propanol (1 mL : 1 mL) with the addition of the modulator acetic acid (50 µL). 40 µL of the respective precursor solution (HHTP: 5.35 mmol L⁻¹; NiAc: 10.7 mmol L⁻¹; HOAc: 1.745 mol L⁻¹) was dropcasted onto the main surface of a clean 1.2 cm x 1.0 cm glass substrate having a gold-coated main surface. Four of such substrates, each carrying a droplet of precursor solution, were placed onto glass spacers as substrate holders in an autoclave partly filled with a solvent bath consisting of water and 1-propanol (2.5 mL : 2.5 mL). The autoclave was sealed immediately and placed into a preheated oven at 85°C for 18 hours. Afterwards, the autoclave was removed from the oven and cooled down for 10 min, before the substrates were rinsed off with dry acetone.

The Ni-CAT-1 MOF film shown in Figure 5A was produced as described in the same way but without providing the modulator.

Figures 6A and 6B show cross-sectional images taken with a SEM of different Co-CAT-1 MOF films. The Co-CAT-1 MOF film shown in Figure 6B was produced as described in the following:
The precursor solution was prepared by providing an HHTP precursor (5.4 x 10⁻³ mmol; 1.75 mg) as organic building blocks and Cobalt acetate (11.0 x 10⁻³ mmol; 3 mg) as metallic precursors in a defined ratio (1:2.5 n:n) and dissolving in a solvent mixture of water, 1-propanol (1 mL : 1 mL) with addition of 50 *µ*L of a water, 1-propanol solution (1 mL : 1 mL) containing salicylic acid as a modulator (0.89 mmol; 125 mg. 40 uL of the respective precursor solution (HHTP:5.35 mmol L⁻¹; CoAc: 12.85 mmol L⁻¹; salicylic acid: 11.23 mmol L⁻¹) was dropcasted onto a clean 1.2 cm x 1.0 cm substrate. Four of such substrates, each carrying a droplet of precursor solution, were placed onto glass spacers as substrate holders in an autoclave partly filled with a solvent bath consisting of water and 1-propanol (2.5 mL : 2.5 mL). The autoclave was sealed immediately and placed into a preheated oven at 85°C for 18 h. Afterwards, the autoclave was removed from the oven and cooled down for 10 min, before the substrates were rinsed off with dry acetone.

The Co-CAT-1 MOF film shown in Figure 6A was produced as described in the same way but without providing the modulator.

As can be seen in Figures 5B and 6B, the use of a modulator leads to the formation of pronounced pillar-like structures when using the modulator, when compared to Figures 5A and 6A, respectively. Even when considering also the structures of the smooth MOF films in Figures 5A and 6A as comprising pillar-like structures, the average peak-to-peak distance of the pillar like structures is in a range of 13 nm for the Ni-CAT-1 MOF film (Figure 5A) and 28 nm for the Co-CAT-1 MOF film (Figure 6A), wherein the average peak-to-peak distance of the pillar like structures of the rough MOF films is 117 nm for the Ni-CAT-1 MOF film (Figure 5B) and 151 nm for the Co-CAT-1 MOF film (Figure 6B), respectively.

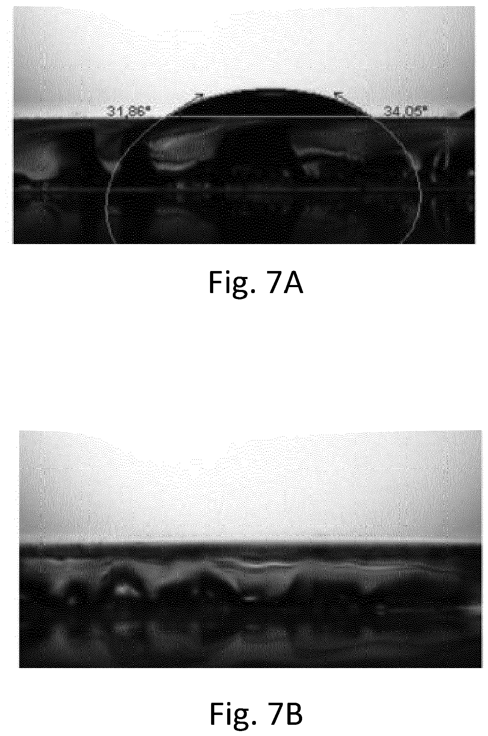

Figures 7A to 7G represent photographs showing in a side view water droplets and oil droplets, respectively, on different MOF films for determining the water contact angle and oil contact angle, respectively, as a measure for the hydrophilic and oleophobic properties respectively. The oil contact angles have been measured under water, i.e. the MOF film and the oil droplet were located under water to be surrounded by water. The used oil for the presented photographs is dichlormethane. Comparable results have been achieved when using other kinds of oil, such as for instance dichlorethane (DCE), chloroform, chlorobenzene, diiodenmethane or benzyl alcohol.

For comparison, the oil contact angles were measured on a pressed M-CAT MOF pellet which does not exhibit a rough surface as achieved in films produced with a modulator. The oil contact angle (dichlormethane) on the M-CAT MOF pellet was measured to be only 90° and therefore a significantly lower oleophobicity was determined as compared to the MOF films produced with a modulator. Moreover, the water contact angle on the M-CAT MOF pellet was measured to be 50° and therefore indicating a significantly lower hydrophilicity as compared to a MOF film produced with a modulator.

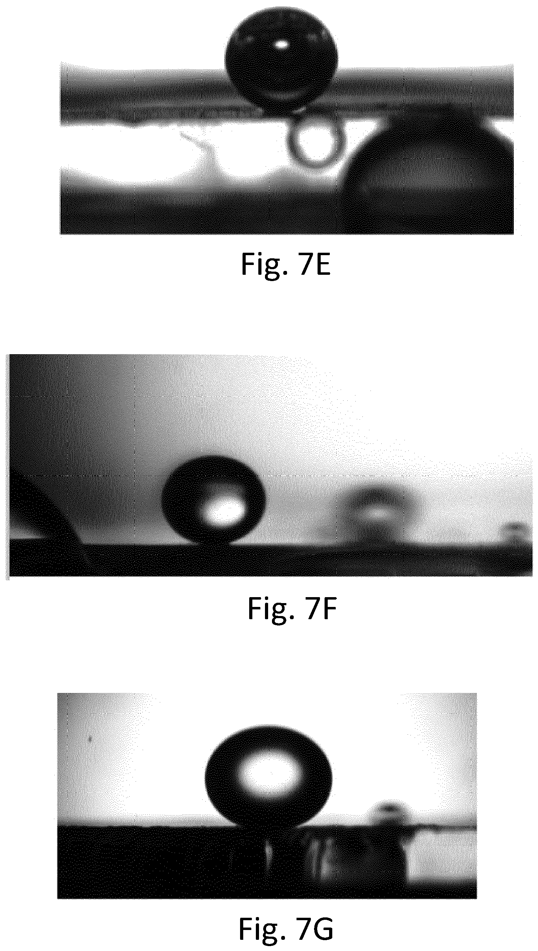

The respective MOF films depicted in Figures 7A to 7F have been grown on a gold surface according to the method described with reference to Figures 5A to 6B, respectively. Figure 7G shows a MOF film grown on a glass substrate resulting in a film having oleophobic properties comparable to the properties of respective films grown on a gold substrate or surface.

Figures 7A shows a water droplet placed on a Ni-CAT-1 MOF film having a smooth surface, which has been grown without modulator on a gold surface. The water droplet is surrounded by air and takes an arrangement having a water contact angle with respect to the surface of about 33°, which represents the mean value of the measured angels of 32° on one side and 34° on the other side. Figure 7B depicts a water droplet placed on a Ni-CAT-1 MOF film formed by using a modulator, having a rough surface as shown in Figure 5B. No water droplet is observable since the water droplet does not remain on the surface of the substrate. Consequently, a water contact angle of 0° is determined at the Ni-CAT-1 MOF film having a rough surface.

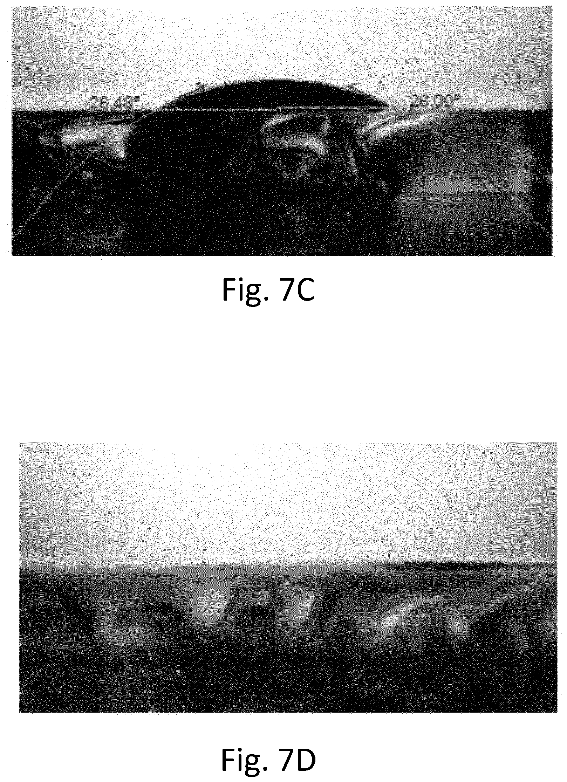

Figures 7C shows a water droplet placed on a Co-CAT-1 MOF film having a smooth surface, as shown in Figure 6A, which was grown without modulator on a gold surface. The water droplet is surrounded by air and takes an arrangement having a water contact angle with respect to the surface of about 26. Figure 7D depicts a water droplet placed on a Co-CAT-1 MOF film formed by using a modulator, having a rough surface as shown in Figure 6B. No water droplet is observable since the water droplet does not remain on the surface of the substrate. Consequently, a water contact angle of 0° is determined at the Co-CAT-1 MOF film having a rough surface.

Figure 7E shows an oil droplet placed on a Ni-CAT-1 MOF film having a rough surface, as shown in Figure 5B, which was grown with a modulator. The oil droplet is surrounded by water and takes an arrangement such as to have an oil contact angle of about 174°. As depicted in Figure 7F, a similar result is achieved by placing an oil droplet on a Co-CAT-1 MOF film having a rough surface, as shown in Figure 6B, which was grown with a modulator. The oil droplet is surrounded by water and takes an arrangement such as to have an oil contact angle of about 175°.

For comparison, Figure 7G shows an oil droplet placed on a Ni-CAT-1 MOF film having a rough surface, as shown in Figure 5B, grown on a substrate having a main surface made of glass. Also in this case an oil contact angle to the substrate of about 166° could be determined. As it is obvious from this comparison, also MOF films on other substrates and surfaces than gold result in good oleophobic behavior. In contrast to Figure 7G, the MOF films shown in figures 7A to 7F are grown on a gold-coated glass substrate, wherein the gold layer forms the main surface.

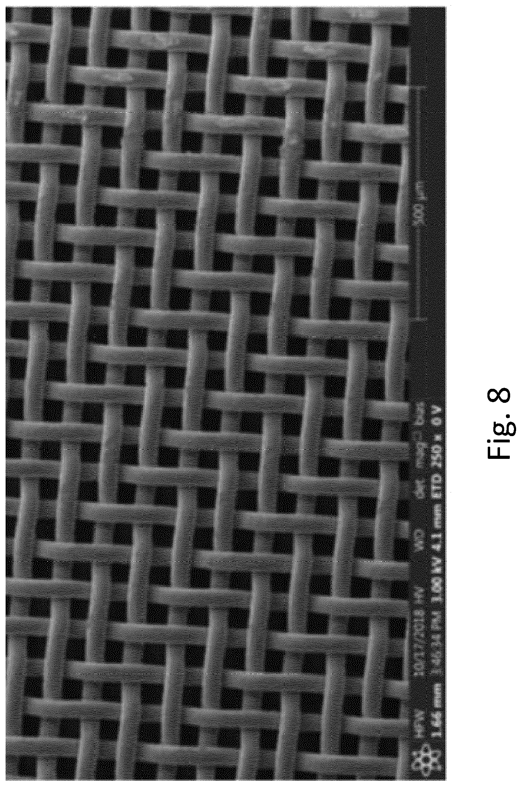

Figure 8 shows a microscopic picture of a stainless steel mesh forming the basis of an oil filter element for separating oil from water. The microscopic picture was taken with a scanning electron microscope (SEM). The stainless steel mesh comprises holes essentially having a square shape with an edge length of about 40 µm. For obtaining the oil filter element, the stainless steel mesh is preferably coated with gold an in turn MOF film is formed on the gold-coated surface of the stainless steel mesh using a modulator. The formed MOF film exhibits a rough surface, which provides the mesh with hydrophilic and oleophobic properties. In a preferred embodiment, the MOF film was produced as a M-CAT-1 MOF film, most preferably a Ni-CAT-1 MOF film.

For optimizing the oil filtering abilities, the mesh size of the stainless steel mesh and also the roughness of the MOF film formed on its surface may be modified. The latter may be achieved by altering the growing conditions, the MOF type and/or the type of the modulator. Due to the super-oleophobic properties of the MOF film covering at least partly the surface of the stainless steel mesh, the filter element allows water to pass through the filter element while oil is retained. By this, an effective separation of water from oil can be achieved. Moreover, due to the fact that the MOF film has a porous structure, these pores may be used for an additional micro-filtering of the water. For instance nanometer-scaled impurities may be filtered out of the water, which provides an additional functionality to the filtering element. For comparison, an identical stainless steel mesh without any coating and an identical stainless steel mesh with a gold coating, but both without a MOF film formed on the surface, were used for an attempt to separate oil from water, which however remained unsuccessful in both cases. Consequently, the advantageous properties regarding the separation of oil from water originate in the MOF film.

### Example

In the following, the invention is illustrated by an example for a method for producing a MOF film without being limited to this example.

All materials used for the production of the MOFs, as described in the following, were purchased from SIGMA ALDRICH, ACROS or TCI EUROPE in the common purities *purum, puriss* or *reagent grade.* The materials were used as received without additional purification and handled in air unless otherwise noted. The water utilized in the synthesis was subjected to a MERCK-MILLIPORE MILI-Q purification system prior to use.

### Substrates

The preparation of gold substrates was based on the procedure described in Dalton Trans. 2012, 41, 3899-3901 by Hinterholzinger et al.. Seven microscope glass slides (MENZEL, 76 mm x 26 mm) in a support made of Teflon were cleaned by ultrasonic treatment in acetone, followed by sequential washing steps with 2-propanol, a 1:100 mixture of HELLMANEX III and water, and finally 2-propanol (Chromasolv). Oxygen plasma cleaning (DIENER ELECTRONIC, Plasma-Surface-Technology) for 30 min was conducted, previous to the mounting of the glass slides in a vacuum deposition unit installed in a glove box (MBraun Labmaster Pro SP equipped with an Inficon SQC-310C Deposition controller). 10 nm of titanium and 40 nm of gold were thermally deposited under high vacuum onto the microscope glass slides.

The respective substrates were prepared by cutting commercially available microscope slides (Menzel, 76 mm x 26 mm), gold coated glass slides and indium-doped tin-oxide (ITO, TEC7, Pilkington) into pieces of 1.2 x 1.0 cm, while quartz substrates were cut into dimensions of 2.0 x 1.5 cm.

ITO, microscope slides (glass), and quartz substrates were cleaned with a detergent (Hellmanex III, 2 vol%), rinsed with water, followed by ethanol and dried in nitrogen flow prior to use.

### Bulk Synthesis

### Ni-CAT-1

In a 5 mL culture tube, a solid mixture of 2,3,6,7,10,11-hexahydroxytriphenylene (0.0107 mmol, 3.5 mg) and nickel(II) acetate tetrahydrate (0.0201 mmol, 5 mg) was suspended in 1 mL 1-propanol and 1 mL distilled water (1:1 v:v). The loading of the culture tube serving as an autoclave was carried out under ambient atmosphere and the resulting blue solution was sonicated for 10 s at maximum power. Subsequently, the culture tube was tightly capped and heated at 85 °C for 18 h in a preheated oven. The resulting black solution was washed three times with 10 mL dry acetone and isolated by centrifugation. The obtained dark blue microcrystalline product was dried under dynamic vacuum prior to analysis.

### Co-CAT-1

In a 5 mL culture tube, a solid mixture of 2,3,6,7,10,11-hexahydroxytriphenylene (0.0107 mmol, 3.5 mg) and cobalt(II) acetate tetrahydrate (0.0207 mmol, 5 mg) was suspended in 1 mL of 1-propanol and 1 mL of distilled water (1:1 v:v). The loading of the culture tube was carried out under ambient atmosphere and the resulting blue solution was sonicated for 10 s at maximum power. Subsequently, the culture tube was tightly capped and heated at 85 °C for 18 h in a preheated oven. The resulting black solution was washed three times with 10 mL of dry acetone and isolated by centrifugation. The obtained dark blue microcrystalline product was dried under dynamic vacuum prior to analysis.

### Cu-CAT-1

In a 5 mL culture tube, a solid mixture of 2,3,6,7,10,11-hexahydroxytriphenylene (0.0107 mmol, 3.5 mg) and copper(II) trifluoroacetylacetonate (0.0162 mmol, 6 mg) was suspended in 1 mL of 1-propanol and 1 mL of distilled water (1:1 v:v). The loading of the culture tube was carried out under ambient atmosphere and the resulting blue solution was sonicated for 10 s at maximum power. Subsequently, the culture tube was tightly capped and heated at 85 °C for 18 h in a preheated oven. The resulting black solution was washed three times with 10 mL dry acetone and isolated by centrifugation. The obtained dark blue microcrystalline product was dried under dynamic vacuum prior to analysis.

### MOF film formation via vapor-assisted conversion (VAC)

For the MOF film formation using VAC, a glass bottle (Schott Duran, borosilicate 3.3, ISO4796, 100 mL) with a PBT cap equipped with a Teflon seal was used serving as an autoclave. The bottom part of the bottle was filled with 14 Raschig-rings (10 mm x 10 mm, soda-lime glass) to obtain an elevated flat platform for the substrate. A mixture of water and 1-propanol was filled into the bottle as a solvent bath. Afterwards, a substrate (1.2 cm x 1 cm) was placed on top of the Raschig-rings and fully coated with a liquid layer of a freshly prepared MOF precursor solution. The bottle was closed and transferred into a preheated oven where it was kept for the specified time. Afterwards, the autoclave was removed from the oven and cooled down for 10 min before the substrate was rinsed with dry acetone.

### Synthesis of Ni-, Co- and Cu-CAT-1 films on gold surfaces

The hexahydroxytriphenylene (HHTP) precursor (2.69 x 10⁻³ mmol; 0.875 mg) and the metal precursors nickel acetate (5.0 x 10⁻³ mmol; 1.25 mg), cobalt acetate (5.0 x 10⁻³ mmol; 1.25 mg) or copper trifluoroacetylacetonate (5.0 x 10⁻³ mmol; 1.25 mg) were mixed in a defined ratio (1:2) and dissolved in a solvent mixture of water and 1-propanol (1.5 mL : 1.5 mL) by sonication for 20 s at maximum power. The obtained precursor solution was filtered through a syringe filter to remove any remaining particles. Subsequent, 40 µL of the solution (HHTP: 0.899 mmol L⁻¹; MOAc: 1.674 mmol L⁻¹) were deposited onto a clean 1.2 cm x 1.0 cm gold substrate. Four of these set-ups were placed onto glass spacers in an autoclave loaded with a solvent mixture of water and 1-propanol (2.5 mL : 2.5 mL). The autoclave was sealed immediately and placed into a preheated oven at 85 °C for 3.5 h. Afterwards, the autoclave was removed from the oven and cooled down for 10 min before the substrate was rinsed with dry acetone.

### Synthesis of Ni-CAT-1 films on ITO substrates

The HHTP precursor (5.4 x 10⁻³ mmol; 1.75 mg) and the nickel acetate (10 x 10⁻³ mmol; 2.5 mg) were mixed in a defined ratio (1:2) and dissolved in a solvent mixture of water and 1-propanol (1 mL : 1 mL) with the addition of the modulator acetic acid (50 µL). 40 µL of the respective precursor solution (HHTP: 5.35 mmol L⁻¹; NiAc: 10.7 mmol L⁻¹; HOAc: 1.745 mol L⁻¹) were deposited onto a clean 1.2 cm x 1.0 cm ITO substrate. Four of these set-ups were placed onto glass spacers in an autoclave loaded with a solvent mixture of water and 1-propanol (2.5 mL : 2.5 mL). The autoclave was sealed immediately and placed into a preheated oven at 85 °C for 18 h. Afterwards, the autoclave was removed from the oven and cooled down for 10 min before the substrates were rinsed with dry acetone.

### Synthesis of Ni-1 CAT-1 films on glass substrates

The HHTP precursor (5.4 x 10-3 mmol; 1.75 mg) and the nickel acetate (10.0 x 10⁻³ mmol; 2.5 mg) were mixed in a defined ratio (1:2) and dissolved in a solvent mixture of water and 1-propanol (1 mL : 1 mL) with the addition of the modulator acetic acid (50 µL). 40 µL of the respective precursor solution (HHTP: 5.35 mmol L⁻¹; NiAc: 10.7 mmol L⁻¹; HOAc: 1.745 mol L⁻¹) were deposited onto a clean 1.2 cm x 1.0 cm ITO substrate. Four of these set-ups were placed onto glass spacers in an autoclave loaded with a solvent bath comprising a mixture of water and 1-propanol (2.5 mL : 2.5 mL). The autoclave was sealed immediately and placed into a preheated oven at 85 °C for 18 h. Afterwards, the autoclave was removed from the oven and cooled down for 10 min before the substrates were rinsed with dry acetone.

### Synthesis of Co-CAT-1 films on glass substrates

The HHTP precursor (5.4 x 10-3 mmol; 1.75 mg) and the cobalt acetate (11.0 x 10⁻³ mmol; 3 mg) were mixed in a defined ratio (1:2.5 n : n) and dissolved in a solvent mixture of water, 1-propanol (1 mL : 1 mL) with addition of 50 µL of a water, 1-propanol solution (1 mL : 1 mL) containing salicylic acid as a modulator (0.89 mmol; 125 mg). **[Question to inventors: Rephrase?]** 40 µL of the respective precursor solution (HHTP: 5.35 mmol L⁻¹; CoAc: 12.85 mmol L⁻¹; salicylic acid: 11.23 mmol L⁻¹) were deposited onto a clean 1.2 cm x 1.0 cm glass substrate. Four of these set-ups were placed onto glass spacers in an autoclave loaded with a solvent mixture of water and 1-propanol (2.5 mL : 2.5 mL). The autoclave was sealed immediately and placed into a preheated oven at 85 °C for 18 h. Afterwards, the autoclave was removed from the oven and cooled down for 10 min before the substrates were rinsed with dry acetone.

### Reference signs

- 10: system for producing a MOF film
- 12: MOF film
- 14: substrate
- 14a: main surface of substrate.
- 16: oven
- 18: autoclave
- 18a: lid of the autoclave
- 20: substrate holder
- 22: precursor solution
- 24: solvent bath
- 26: vapor atmosphere with solvent and modulators
- 28: modulator
- 30: organic building block (chemical structure)
- 30a: connection site
- 32: metallic precursor (chemical structure)
- 34, 34a, 34b, 34c: organometallic compound

## Claims

1. A method for producing a metal organic framework, MOF, film (12) on a substrate (14), the method comprising:
- providing a precursor solution (22) on a main surface (14a) of the substrate (14), the precursor solution (22) comprising organic building blocks (30) and metallic precursors (32), wherein the organic building blocks (30) and the metallic precursors (32) are selected to form organometallic compounds (34) allowing a formation of an anisotropic MOF;
- forming a MOF film (12) on the main surface (14a) of the substrate (14) by forming organometallic compounds (34) from at least some of the organic building blocks (30) and at least some of the metallic precursors (32) of the precursor solution (22), wherein a modulator (28) is provided for mediating at least partly the morphology of the MOF film (12) during the formation of the MOF film (12) such as to increase a roughness of the MOF film (12).

2. The method according to claim 1, wherein the organic building blocks (30) have a symmetrical structure in one dimension, wherein the structure is preferably rotationally symmetric and more preferably has at least a 2-fold (C2), or a 3-fold (C3), or a 4-fold (C4) or a 6-fold (C6), or 8-fold (C8) symmetry.

3. The method according to claim 1 or 2, wherein each of the organic building blocks (30) has two or more connection sites (30a) for connecting to at least one of the metallic precursors (32) or to a part of one of the metallic precursors (32).

4. The method according to any one of the preceding claims, wherein the modulator (28) is selected to mediate the morphology of the MOF film (12) such as to form pillar-like and/or rod-like and/or needle-like structures.

5. The method according to any one of the preceding claims, wherein the modulator (28) comprises a weak ligating group.

6. The method according to any one of the preceding claims, wherein the modulator (28) comprises at least one of the following elements: O, S, N, and C.

7. The method according to any one of the preceding claims, wherein the modulator (28) comprises an amine and/or an acid and/or an alcohol and/or thiol.

8. The method according to any one of the preceding claims, wherein the modulator (28) comprises at least one carboxylic acid, preferably acetic acid and/or salicylic acid.

9. The method according to any one of the preceding claims, wherein the metallic precursors (32) comprise at least one of the following elements: Ni, Co, Zn, Mn, Fe, and Mg.

10. The method according to any one of the preceding claims, wherein providing the precursor solution (22) on the main surface (14a) comprises casting the precursor solution (22) onto the main surface (14a) and/or printing the precursor solution (22) onto the main surface (14a) and/or dipping the main surface (14a) at least partly into the precursor solution (22).

11. The method according to any one of the preceding claims, wherein the precursor solution (22) at least partly comprises the modulator (28) and/or wherein the modulator (28) is at least partially provided in vapor phase.

12. The method according to any one of the preceding claims, wherein the method for producing the MOF film (12) uses at least one of the following techniques: vapor-assisted conversion, dry-gel conversion, liquid-phase epitaxy, steam-assisted conversion.

13. The method according to any one of the preceding claims, wherein the MOF film (12) is formed on the main surface (14a) of the substrate (14) such that an upper surface of the MOF film (12) has a roughness of at least 25 nm, preferably of at least 30 nm, more preferably of at least 35 nm, most preferably of at least 40 nm.

14. A metal organic framework, MOF, film (12), wherein:
- the MOF film (12) is formed on a substrate (14) by an anisotropic MOF of organometallic compounds (34);
- the organometallic compounds (34) are formed by organic building blocks (34) and metallic precursors (32); and
- wherein an upper surface of the MOF film (12) has a roughness of at least 25 nm.

15. Use of a metal organic framework, MOF, film (12) for separating oil from water.
